# EUROPEAN PATENT SPECIFICATION

(11) **EP 3 073 030 B1**
(45) Date of publication and mention of the grant of the patent: **08.05.2019**
(21) Application number: 16162428.3
(22) Date of filing: 24.03.2016
(51) Int. Cl.: E04H 12/18, F16D 59/02, F16D 63/00, F21V 21/38, G09F 7/20, E01F 9/65

(54) **BRAKING MECHANISM FOR AN EQUIPMENT POLE**
BREMSMECHANISMUS FÜR EINEN AUSRÜSTUNGSMAST
MÉCANISME DE FREIN POUR PYLÔNE D'ÉQUIPEMENT

(30) Priority: 27.03.2015 GB 201505260
(43) Date of publication of application: 28.09.2016
(73) Proprietor: Crown UK Limited, Bristol BS20 7BX (GB)
(72) Inventor: Palmer, James, Portishead, Bristol BS20 7BX (GB); Stacey, Mark, Portishead, Bristol BS20 7BX (GB)
(74) Representative: Mewburn Ellis LLP

(56) References cited:
- AU-B2- 662 526
- FR-A1- 2 795 146
- US-A- 3 949 842

## Description

### FIELD OF THE INVENTION

The invention relates to an equipment pole for supporting equipment. In particular, the invention relates to a mechanism for accessing equipment located on a static (i.e. permanently installed) pole, e.g. for maintenance or the like.

### BACKGROUND TO THE INVENTION

Equipment poles are typically used in outdoor environments, e.g. adjacent roads or in urban areas, for supporting objects such as road signs, traffic light signals, dot-matrix information signs, closed-circuit television cameras, speed cameras, advertising boards, etc. It is often desirable for the supported objects to be inaccessible to people on the ground, e.g. to be visible or obtain a good field of view, or to inhibit vandalism. This means that the equipment pole needs a mechanism to provide access to the supported objects, e.g. for maintenance, installation, etc.

A known method of accessing equipment on a pole is through hinging the pole near the base. Such an equipment pole is shown in WO 2008/149376. This allows any equipment mounted on the pole to be lowered to the ground by rotating the body of the pole around a pivot located near its base. A problem with this type of equipment pole is that there needs to be a large amount of space available around the base of the pole. This reduces the available installation points of such an equipment pole, particularly in city or urban settings.

FR 2 913 029 discloses a mast for a traffic sign in which a signalling panel is attached to a carriage that is slidable up and down the mast. The carriage is connected to a counterweight to facilitate manual movement of the carriage. The counterweight is contained within the body of the mast.

AU 662,526 B2 describes a safety brake mechanism for a movable panel having a counterweight assembly for applying a counter balancing force to the panel. The safety brake mechanism includes a brake means operable to cooperate with a stationary means so as to hold the associated panel against movement in one direction, and control means to render the brake operative in response to a loss or reduction in force imposed by the counterweight.

US 3,949,842 A describes a device to prevent a light-channel ring and lighting fixtures of high mast lighting installations from falling in the event of failure of the main hoisting cable or in the event of failure or inadvertent release of the releasable supporting means at the top of the mast.

### SUMMARY OF THE INVENTION

The disclosure herein proposes a number of improvements to a counter-weight type equipment pole. Expressed generally, the improvements are: (i) a brake mechanism for the height adjustment mechanism that automatically engages upon a loss of tension in the system; (ii) a separate lock-off mechanism for the height adjustment mechanism, e.g. which relieves the load on the height adjustment mechanism; and (iii) a common cable feed arrangement for two equipment platforms on an equipment supporting sleeve that is slidable up and down the pole. Each of this improvements is expressed as a different aspect of the invention below.

Thus, according to a first aspect of the invention, there is provided an equipment pole comprising: an upstanding elongate member for supporting equipment; a sleeve for carrying the equipment, the sleeve being slidably mounted on the upstanding elongate member; a counter-weight carriage connected to the sleeve over a fulcrum on the upstanding elongate member whereby the weight of the counter-weight carriage provides a balancing force to counter the weight of the sleeve; a support element under tension to hold the sleeve and counter-weight carriage stationary with respect to the upstanding elongate member; a movement mechanism for adjusting the position of the sleeve on the upstanding elongate member by altering the length of the support element; and an auto-locking brake mechanism mounted on the upstanding elongate member, the auto-locking brake mechanism being connected to the sleeve and having a disengaged configuration in which it is movable relative to the upstanding elongate member with the sleeve and an engaged configuration in which it engages the upstanding elongate member to prevent movement of the sleeve relative to the upstanding elongate member, wherein the auto-locking brake mechanism is arranged to adopt the engaged configuration if a tension force in the support element falls below a threshold. The upstanding elongate member may represent the main support frame of the equipment pole, and may be a fixed structure extending upwards from a base that is fixed to the ground or another external structure. The upstanding elongate member may be hollow to contain the cables for the equipment supported on the sleeve, and to contain the movement mechanism. The sleeve and counter-weight carriage may be connected to each other by a wire (preferably by a plurality of wires for safety) which extend over the fulcrum. Operation of the movement mechanism may cause the sleeve and counter-weight carriage to change height relative to the upstanding elongate member, e.g. by sliding the wire or wires over the fulcrum. The fulcrum may include one or more pulleys to facilitate the sliding. By balancing a portion of the weight of the sleeve, the counter-weight carriage enables the movement mechanism to the operated manually, because the force required to move the sleeve and counter-weight carriage combination is less than would be required to move the sleeve alone.

The sleeve and counter-weight carriage may not be perfectly balanced, i.e. one of the sleeve and the counter-weight carriage has a mass greater than the other so that the weight force on one side of the fulcrum is greater than the other. This means the sleeve and counter-weight carriage combination tends to slide over the fulcrum in a certain direction. This tendency is resisted by the support element, which is therefore under tension. In one embodiment, the weight of the sleeve may be greater than the weight of counter-weight carriage, and the support element may be connected between the counter-weight carriage and an anchor point that is fixed with respect to the upstanding elongate member.

The movement mechanism may comprise a winch, and the support element may be a wire (or a plurality of wires) whose length is adjustable using the winch. The heights of the sleeve and counter-weight carriage relative to the upstanding elongate member may thus be adjusted by controlling the length of the support element that extends between the winch and the sleeve and counter-weight carriage combination.

The support element may be connected to the sleeve and counter-weight carriage combination via the auto-locking brake mechanism. For example, if the sleeve is heavier than the counter-weight carriage, the auto-locking brake mechanism may be mounted in the counter-weight carriage, and may be coupled directly to the support element.

The auto-locking brake mechanism may include a biasing element arranged to apply a biasing force that biases the auto-locking brake mechanism towards the engaged configuration. The tension force in the support element may be arranged to counteract the biasing force if the tension force is above the threshold, and therefore act to hold the auto-locking brake mechanism in the disengaged configuration. Accordingly, if the tension force is below the threshold, the auto-locking brake mechanism automatically adopts the engaged configuration. This may occur if the support element fails, e.g. the winch wire or wires snap, or if the tension in the support element is relieved through engagement of a separate lock-off mechanism (discussed in more detail below).

The auto-locking brake mechanism may be disposed within the interior of the upstanding elongate member. In the engaged configuration it may physically jam itself between opposing inner walls of the upstanding elongate member. For example, the auto-locking brake mechanism may comprise a pair of opposed engagement elements which are laterally movable between an outwardly protruding position in the engaged configuration and a retracted position in the disengaged position. The spring that is compressible by the tension force in the support element may be arranged to bias the pair of opposed engagement elements towards the outwardly protruding position. In one embodiment this is achieved by providing the auto-locking brake mechanism with a plate and boss, the boss being fixed with respect to the counter-weight carriage and the plate being movably mounted with respect to the counter-weight carriage, wherein the spring is mounted between the plate and boss and the support element is attached to the plate.

The spring force and the tension force may act in a longitudinal direction, e.g. aligned with the upstanding elongate member. The auto-locking brake mechanism may comprise a force transfer mechanism connected to transform a longitudinal input force (e.g. corresponding to the combination of the spring force and tension force) into an activation force for moving the pair of opposed engagement elements. For example, the force transfer mechanism may comprise a pair of pivoting arms, each pivoting arm being coupled to a respective one of the pair of opposed engagement elements, and wherein each of the pair of opposed engagement elements is a snail cam brake disc.

According to a second aspect of the invention, there is provided an equipment pole comprising: an upstanding elongate member for supporting equipment; a sleeve for carrying the equipment, the sleeve being slidably mounted on the upstanding elongate member; a counter-weight carriage connected to the sleeve over a fulcrum on the upstanding elongate member whereby the weight of the counter-weight carriage provides a balancing force to counter the weight of the sleeve; a support element under tension to hold the sleeve and counter-weight carriage stationary with respect to the upstanding elongate member; a movement mechanism for adjusting the position of the sleeve on the upstanding elongate member by altering the length of the support element; and a lock-off mechanism mounted on an anchor point that is fixed relative to (e.g. at the base of) the upstanding elongate member, the lock-off mechanism being operable to hold the sleeve and counter-weight carriage stationary with respect to the upstanding elongate member and thereby relieve tension in the support element. The lock-off mechanism may thus act as an additional safety feature and as a means for reducing load on the movement mechanism, which may extend its working life.

The lock-off mechanism may be connectable with the counter-weight carriage if the counter-weight carriage is in a predetermined position on (e.g. at a predetermined height relative to) the upstanding elongate member.

Any type of physical structure for supporting a tensile load may be used for the lock-off mechanism. For example, the lock-off mechanism and counter-weight carriage may include cooperating engagement features (e.g. hook and eyelet or the like). The lock-off mechanism may comprise a pivotable engagement element and an over-centre latch for retaining the pivotable engagement element in an engaged position. This arrangement ensures that the lock-off mechanism does not accidentally disengage.

Features of the first aspect discussed above may be equally applicable to (i.e. combined with) features of the second aspect.

According to a third aspect of the invention, there is provided an equipment pole comprising: an upstanding elongate member for supporting equipment; a sleeve for carrying the equipment, the sleeve being slidably mounted on the upstanding elongate member; a counter-weight carriage connected to the sleeve over a fulcrum on the upstanding elongate member whereby the weight of the counter-weight carriage provides a balancing force to counter the weight of the sleeve; a support element under tension to hold the sleeve and counter-weight carriage stationary with respect to the upstanding elongate member; and a movement mechanism for adjusting the position of the sleeve on the upstanding elongate member by altering the length of the support element, wherein the sleeve comprises: a support beam extending laterally from opposing sides of the upstanding elongate member; a pair of platforms for receiving equipment, the platforms being mounted on the support beam at opposing sides of the upstanding elongate member; and an enclosed equipment cable routing portion having a cable connection point to provide access from the upstanding elongate member and a pair of cable ports to provide access respectively to the pair of platforms, and wherein the cable connection point is shared by equipment on both of the pair of platforms. The sleeve may therefore provide a common protected pathway for cables to reach the equipment on the sleeve from within the upstanding elongate member.

The support beam may be hollow to reduce its mass whilst retaining structural strength. The enclosed equipment cable routing portion may include a section that is inside a portion of the support beam.

Features of the first and second aspects discussed above may be equally applicable to (i.e. combined with) features of the third aspect.

Features of the first, second and third aspects may be expressed independently of the upstanding elongate member. For example, the disclosure herein presents an auto-locking brake mechanism for a counter-weight type equipment pole, the auto-locking brake mechanism comprising: a frame containing a pair of engagement elements which are movable in opposing lateral directions with respect to the frame between an outwardly protruding position and a retracted position; and an brake engagement mechanism arranged to receive a longitudinal input force, wherein the brake engagement mechanism is arranged to move the pair of engagement elements to the outwardly protruding position if the longitudinal force falls below a threshold. Features of the auto-locking brake mechanism discussed above may be equally applicable here.

Similarly, the disclosure herein presents an equipment supporting sleeve for a counter-weight type equipment pole, the equipment supporting sleeve comprising: a collar suitable for slidable mounting on an equipment pole; a support beam mounted on the collar and extending laterally from opposing sides thereof; a pair of platforms for receiving equipment, the platforms being mounted on the support beam at opposing sides of the collar; and an enclosed equipment cable routing portion having a cable connection point to provide access from inside the collar and a pair of cable ports to provide access respectively to the pair of platforms, wherein the cable connection point is shared by equipment on both of the pair of platforms. Features of the sleeve discussed above may be equally applicable here.

### BRIEF DESCRIPTION OF THE DRAWINGS

Embodiments of the invention are discussed below with reference to the accompanying drawings, in which:
Fig. 1 is a side planar view of an equipment pole;
Fig. 2 is a side planar view of the equipment pole of Fig. 1, in a configuration where winch controls are accessible, and the equipment holder has been lowered;
Fig. 3 is a rotated perspective view of a sleeve placed around the equipment pole of Fig. 1;
Fig. 4 is a top-down planar view of the sleeve of Fig. 3;
Fig. 5 is a perspective view of the sleeve of Fig. 3;
Fig. 6 is a perspective view of a lock-off mechanism;
Fig. 7A is a side planar view of the lock-off mechanism of Fig. 6 in an unlocked configuration;
Fig. 7B is a side planar view of the lock-off mechanism of Fig. 6 in a locked configuration;
Fig. 8 is a perspective view of a counter-weight carriage;
Fig. 9 is a front planar view of the counter-weight carriage of Fig. 8;
Fig. 10 is a right-side planar view of the counter-weight carriage of Fig. 8;
Fig. 11 is a top-down planar view of the counter-weight carriage of Fig. 8;
Fig. 12 is a rotated perspective view of the counter-weight carriage of Fig. 8;
Fig. 13A is a cut-away front planar view of an auto-locking brake system in an un-deployed mode;
Fig. 13B is a front planar view of the auto-locking brake system of Fig. 13A in a deployed mode;

### DETAILED DESCRIPTION; FURTHER OPTIONS AND PREFERENCES

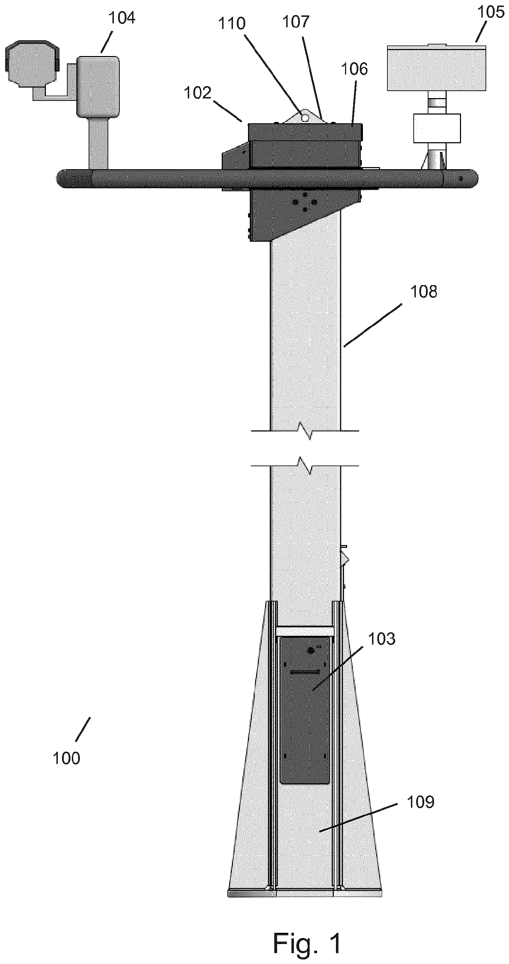

Fig. 1 shows an equipment pole 100, which contains a number of aspects of the present invention. The pole 100 is not shown to scale, as indicated by the break lines, and may be of any suitable dimension. The pole 100 has a base 109, elongate section 108 and top 107. The base 109 may be provided fixed into foundations (not shown) within the ground. The base 109 anchors the equipment pole 100 and may be hollow so as to contain various workings of the equipment pole 100. The elongate section 108 extends from the base 109 upwards, forming the body of the pole 100. At the end of the elongate section 108 is the top 107 of the pole 100. The top 107 of the pole may have an eyelet 110 to allow the pole 100 to be lifted into position with a crane when installed. In examples the pole 100 may be as tall as 20 metres, or as short as 4 metres. The pole 100 has an access panel 103 on its base 109, which prevents unauthorised access to a winch 202, a lock-off mechanism 201, and any cabling located therein. The winch controls allow the movement of a sleeve 102, which is mounted around a portion of the outside of the pole 100, along the elongate section of the pole. The sleeve 102 allows the installation of equipment; for example a camera 104 or infrared illumination device 105. It is preferable with such systems that the cabling is not exposed to the elements so as to prevent vandalism and/or reduce the amount of maintenance required. Preferably therefore the cabling for the equipment installed is located, as much as is possible, within the equipment pole 100. For example cabling may run from the sleeve 102 when it as the top of the pole, within the pole 100, down to any power or data lines installed in the base. In the configuration shown, the sleeve 102 is located at the top of the pole 100 in a top position. The sleeve 102 can be lowered or raised using the winch controls located behind access panel 103. When raising the sleeve 102, locating pin receiver 106 at the top of the pole 100 ensures the accurate re-location of the sleeve 102 in the top position.

A counter-weight carriage 800 (not shown) is installed within the elongate section of the pole 100, to aid the movement of the sleeve 102. A counter-weight carriage access door (not shown) may be installed in a side of the pole 100 to enable maintenance of the counter-weight carriage 800. The counter-weight carriage 800 is connected to the winch via one or more wires. The word "wire" is used herein to refer to a tensioned load-bearing structure, which may be made of metal or other material with suitable physical properties. Herein, the word "wire" is used to distinguish from a "cable", which is used herein to indicate a transmission line e.g. for electrical or optical signals for carrying power or data.

The wires extend from the counter-weight carriage 800 upwards, within the elongate section of the pole, over pulleys which act as fulcrums located at the top of the pole, and connect to a mounting point on the sleeve 102. Thus the counter-weight carriage 800 off-sets a portion of the weight of the sleeve. When the sleeve 102 is in the top position, the counter-weight carriage 800 is below the sleeve 102. It may be that when the sleeve 102 is in the top position the counter-weight carriage 800 is near the bottom of the pole 100. The elongate section of the pole 100 may be, for example, made of grade S355 J2H steel, and all other steel work may be made of a minimum of grade S275 steel (both according to European standard steel grades).

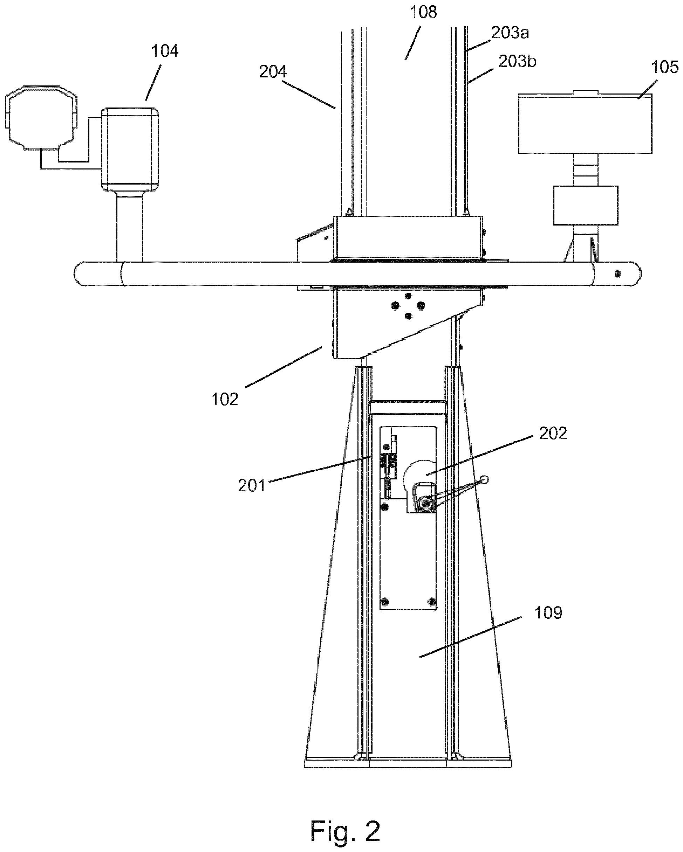

Fig. 2 shows the equipment pole 100 of Fig. 1, where the sleeve 102 is in a bottom position. This bottom position allows a technician access to the sleeve 102 and any equipment 104, 105 mounted to the sleeve 102. Also in this view, the access panel 103 has been removed, enabling access to the winch 202 as well as lock-off mechanism 201. When the sleeve 102 is moved from the top position, wires 203a, 203b and cable bundle 204 are exposed. As discussed above, the wires 203a and 203b are provided act as tension-bearing wires such that the sleeve 102 and counter-weight carriage 800 are mechanically linked. In contrast, the cable bundle 204 provides data and power transmission lines to the sleeve 102. When the sleeve 102 is in the top position, the wires 203a, 203b and cable bundle 204 are generally within the equipment pole 100. The cable bundle 204 may contain data or power linkages for the equipment 104, 105 installed on the sleeve 102. The wires 203a, 203b connect to the sleeve 102, pass over pulleys at the top of the pole 100 (not shown), and connect to the counter-weight carriage 800. The counter-weight carriage 800 is then connected to the winch 202. The cable bundle 204 should comprise a suitably flexible cable housing, for example a Kopex housing, and is connected between the sleeve 102 and counter-weight carriage 800. As the counter-weight carriage 800 moves in sync with the sleeve 102 but in an opposite direction the amount of wire and/or cable between the counter-weight carriage 800 and sleeve 102 may remain constant.

Therefore the cabling or wire extending between the sleeve 102 and counter-weight carriage 800 does not need to be coiled/folded when the sleeve 102 is moved. It may be that external data and power linkages connect to the equipment 104, 105 via breakable links contained on or in the counter-weight carriage 800. As the counter-weight carriage 800 is generally at a bottom position when the sleeve 102 is in a top position, and therefore accessible, the breakable links contained within it may be made when the sleeve 102 is in the top position. Therefore, when moving the sleeve 102 to a bottom position, the equipment can be disconnected from power and/or data linkages at the counter-weight carriage 800 prior to operating the winch 202. The sleeve 102 and counter-weight carriage 800 system may be balanced such that, without any restraint, the sleeve 102 will naturally descend to the bottom position i.e. the sleeve 102 weighs more (has a greater mass) than the counter-weight carriage 800.

The winch 202 enables the technician to lower or raise the sleeve 102. The presence of the counter-weight 800 reduces the force required to move the system, and hence enables adjustment to be made manual (i.e. without an external power source). When the sleeve 102 is in the bottom position, the counter-weight carriage 800 is above the sleeve 102. If may be that when the sleeve 102 is in the bottom position the counter-weight is at the top of the pole 100. The winch 202 enables the technician to increase or decrease the free length of wire between the winch and the counter-weight carriage 800, as is well understood in the field. However in order to do so the lock-off mechanism 201 should be disengaged. This will be discussed in more detail below.

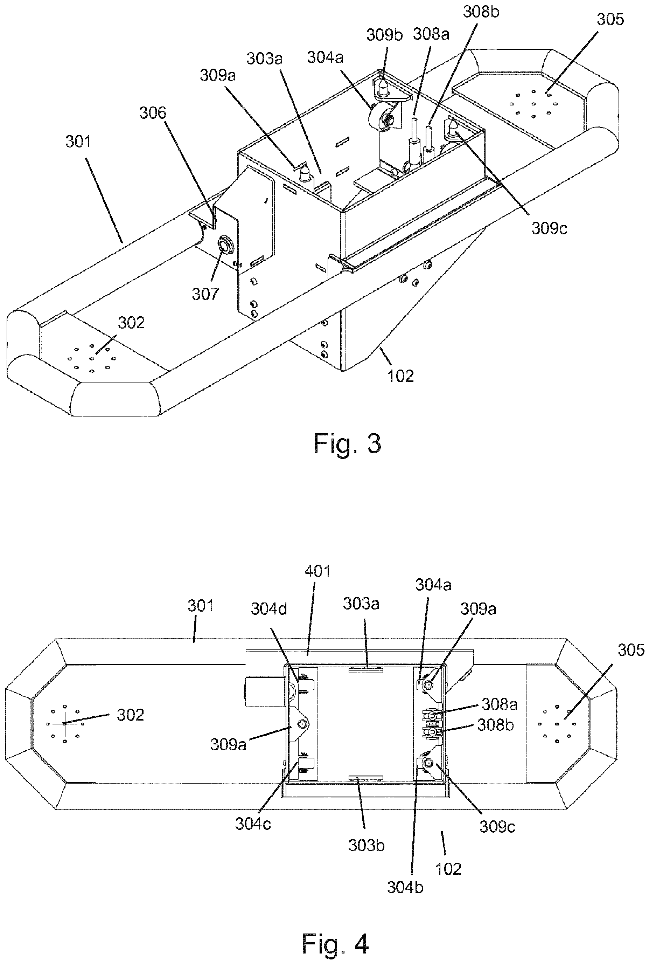

Fig. 3 shows the sleeve 102 in more detail, separate from the pole 100. The sleeve 102 has a number of wheels, 304a - 304d, which enable the sleeve to be raised or lowered smoothly. These wheels 304a - 304d engage the outside of the pole 100 and ensure that the sleeve 102 is constantly spaced from it when moved. The sleeve 102 also has a pair of sleeve guides 303a and 303b, which can be used to reduce sideways movement when the sleeve 102 is raised or lowered by ensuring that the sleeve 102 fits closely against the pole 100 exterior. The sleeve guides 303a and 303b may be made of a low friction material, so that they do not impede the movement of the sleeve 102. The sleeve guides 303a and 303b are mounted on inner surfaces of the sleeve 102 which do not have a wheel 304a - 304d and extend so as to abut the outer surface of the pole 100. The distance from which the sleeve guides 303a and 303b protrude from the inner surface of the sleeve 102 is adjustable to allow for variations in the pole and/or sleeve dimensions. The sleeve guides and wheels may be made of nylon. The sleeve 102 also has locating pins 309a - 309c which engage with the locating pin receiver 106 when the sleeve 102 is in the top position. This aids re-location of the sleeve 102 when it is returned to the top position. Also shown are the sleeve ends of the wires 203a and 203b, forming ferrules 308a and 308b which connect with mounts on the sleeve 102. The sleeve 102 is therefore suspended from the wires 203a, 203b as they pass over pulleys, located near the top 107 of the pole 100, are connected to the counter-weight carriage 800 on the other side of the pulley to the sleeve 102. The mounts may be adjustable eye bolts. It may be that one of the wires 203a or 203b may be provided as a fail-safe wire in the event of failure of the other wire.

The sleeve 102 has equipment installation points 302 and 305; which may also be referred to as equipment tables 302 and 305. These installation points are generally formed of a plate of metal connected to a support beam 301, the plates having a number of holes drilled through to enable screw-mounting of equipment. In some embodiments, the distance from the centre of pole 100 (i.e. the approximate centre of the box section of the sleeve) to the equipment installed is different for different installation points. This enables equipment of differing weights to be installed without fear of inducing an unbalanced force which may, for example, cause asymmetric wear on the wheels 304a - 304d or additional stress on the sleeve 102. The equipment installation points 302 and 305 are provided at the respective ends of the support beam 301 which extends away from the sleeve 102 in opposite directions. The support beam 301 may be hollow, so as to reduce the weight of the support beam 301 whilst retaining strength. The cabling for any equipment may run external to the support beam 301, entering the sleeve 102 at conduit bushes 307, 502 on the outside of the sleeve 102. Alternatively cabling for the equipment may run within the support beam 301 so as to minimise the length of cabling exposed to the outside environment.

To allow the equipment installed in position 302 to be connected to power or data points, a cable connection box 306 is installed onto the sleeve, with a conduit bush 307 projecting from the cable connection box 306. In some embodiments a panel of the connection box 306 may be removable so as to allow access to cables using the connection box. Connection box 306 forms one end of a cable management unit 401. The cable management unit 401 allows equipment installed at either end using either conduit bush 307 or conduit bush 502 to share a connection clip 501. The cable management unit 401 may include an opening (not shown) into the interior of the hollow support beam 301, e.g. for carrying cables around to the equipment installation locations 302, 305. Cables entering the cable management unit 401 exit at connection clip 501. Thus equipment installed in either installation point 302 or 305 can have cables routed through a single point 501.

Whilst two equipment installation points 302 and 305 are shown, the skilled person will appreciate that any number may be installed. Generally they are installed in a symmetric fashion, to avoid the aforementioned unbalanced load issues. The sleeve 102 may be constructed of 8mm thick mild steel of minimum grade S275. The sleeve 102 may be galvanised to BS EN 1461. Fig. 4 is a top-down planar view of the sleeve 102 discussed previously.

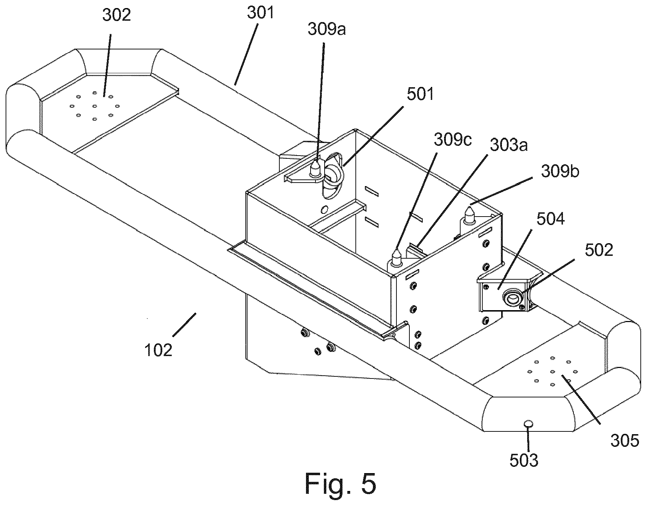

Fig. 5 is a rotation of the perspective view shown in Fig. 3, which shows connection clip 501. The connection clip 501 allows the installation of cabling bundle 204 from the equipment installed at installation points 302, 305 through to a terminus of said cabling bundle 204 in or around the base of the pole 100. Also shown is cable connection box 504 for use with equipment installation point 305. As with cable connection box 306, cable connection box 504 has conduit bush 502 to enable cables for use with equipment installed in installation point 305 to connect to cable connection box 504 whilst limiting any ingress of water. The cabling entering the connection box 504 is then routed to the connection clip 501. Drainage hole 503 is provided during any galvanisation e.g. hot-dip galvanisation, but is plugged during final assembly to prevent the ingress of water.

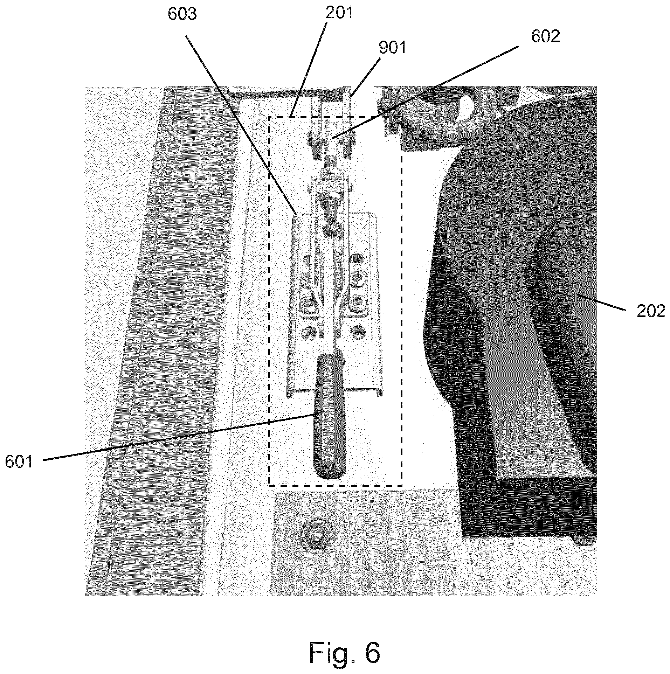

Fig. 6 shows the lock-off mechanism 201 in more detail. The lock-off mechanism 201 has a handle 601, as well as hook 602, and is fixed via a base plate 603 to the pole 100. The lock-off mechanism forms an over-centre latch, in which handle 601 is pivotally mounted at a handle pivot 701 to the base plate 603 so as to be rotatable, and the hook 602 is pivotally mounted to the handle 601 at a hook pivot 702 between the end of the handle 601 and the handle pivot 701 where the handle 601 is pivotally mounted to the base plate 603. As will be readily understood, the distance between the hook pivot 702 and the handle pivot 701 determines the extent to which the hook 602 may extend from the handle 601. The hook 602 is capable of being engaged with a hook receiver 901 connected to the counter-weight carriage 800.

Therefore in the configuration where the hook 602 is engaged with the hook receiver 901, the counter-weight carriage 800 is directly anchored to the base plate 603 of the pole 100, and so cannot be raised. This is the locked position. As the hook 602 connects to the hook receiver 902 which is a part of the counter-weight carriage 800, the lock-off mechanism 201 is usable only when the counter-weight carriage 800 is in the bottom position, i.e. when the sleeve 102 is in the top position. The winch 202 enables the technician to raise or lower the sleeve 102 when the lock-off mechanism is not engaged. In the configuration shown in Fig. 6, the lock-off mechanism 201 is locked as hook 602 is engaging the hook receiver 901, and the handle 601 is in the lowered position.

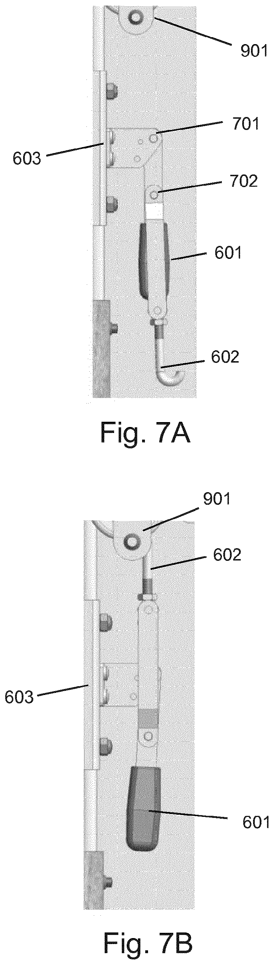

The unlocked and locked configurations are showed respectively in Figs. 7A and 7B. In the unlocked position, the hook 602 is not engaged with the hook receiver 901, and so the counter-weight carriage 800 is free to move within the pole 100. To move from the unlocked position to the locked position, handle 601 is rotated so that the hook 602 is in a position to engage the hook receiver 901 e.g. it is above the hook receiver 901. The handle 601 is then rotated, whilst retaining the hook 602 in a substantially vertical orientation, so as to lower the hook 602 so that the hook 602 engages the hook receiver 901 and stops the counter-weight carriage 800 from being raised within the pole 100.

It is preferred that the system is slightly off balance as discussed above, i.e. the sleeve 102 weighs more than the counter-weight carriage 800, the hook 602 may be utilised when the sleeve 102 is in the top position to stop the sleeve 102 from descending. Additionally or alternatively, the hook 602 may be used to remove tension from the winch 202 when the winch 202 is not in use, so as to prevent jamming or premature degradation of the winch cable. The system is in tension due to the weight of the sleeve 102 acting against the reaction force provided by the hook 602. When the hook 602 is not engaged with the hook receiver 901, the system can be in tension due to the weight of the sleeve 102 and the operator restraining the winch 202.

Alternatively other braking or restraint arrangements may be provided as a primary method of stopping the sleeve 102 from moving, such as brakes within the winch 202, with the lock-off mechanism 201 acting as a backup device.

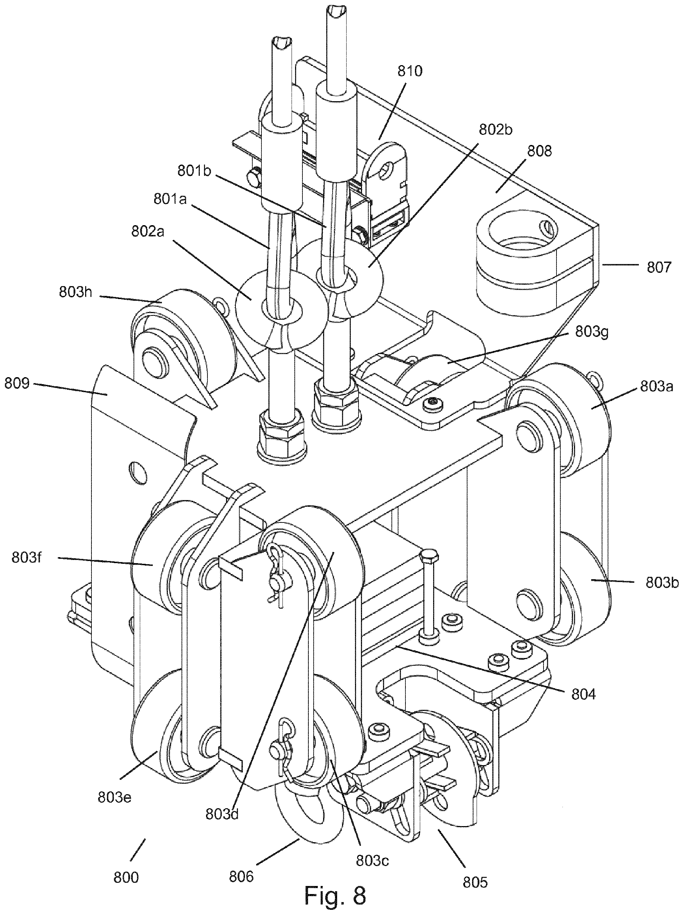

The counter-weight carriage 800 is shown in Fig. 8. Generally the counter-weight carriage 800 is located within the elongate section 108 of the pole 100. Its role is to provide a counter-weight to the sleeve 102, and so reduce the energy required to raise and lower the sleeve 102 as discussed above. It has a number of wheels 803a - 803j which allow it to smoothly move within the pole 100. The wheels engage the inner surface of the pole 100 in a manner similar to how the wheels 304a-d of the sleeve 102 engage the outer surface of the pole 100. The counter-weight carriage 800 has a number of weights 804 positioned generally within the centre of the carriage. Generally above the weights 804 are eye bolts 802a and 802b which connect to respective ferrules 801a and 801b at the end of wires 203a and 203b. Therefore the point through which the weight is held in tension by the ferrules 801a and 801b is generally in line with the centre of mass of the counter-weight carriage 800. This reduces any asymmetry in the weight applied, and may prevent asymmetric wear in the wheels 803a-803j.

The ferrules 801a and 801b form the other end of the wires 203a and 203b to those connected to the sleeve 102 at 308a and 308b. The number of weights 804 and therefore total weight of the counter-weight carriage 800 may be determined by the total weight of the sleeve 102 including any equipment 104, 105 installed. As considered above, it may be that the total weight of the sleeve 102 including said equipment is greater than the total weight of the counter-weight carriage 800, and so the sleeve 102 would naturally descend the pole 100. The connection via wires 203a and 203b provide a mechanical link between the counter-weight carriage 800 and the sleeve 102, such that the counter-weight carriage 800 may act as a counter-weight.

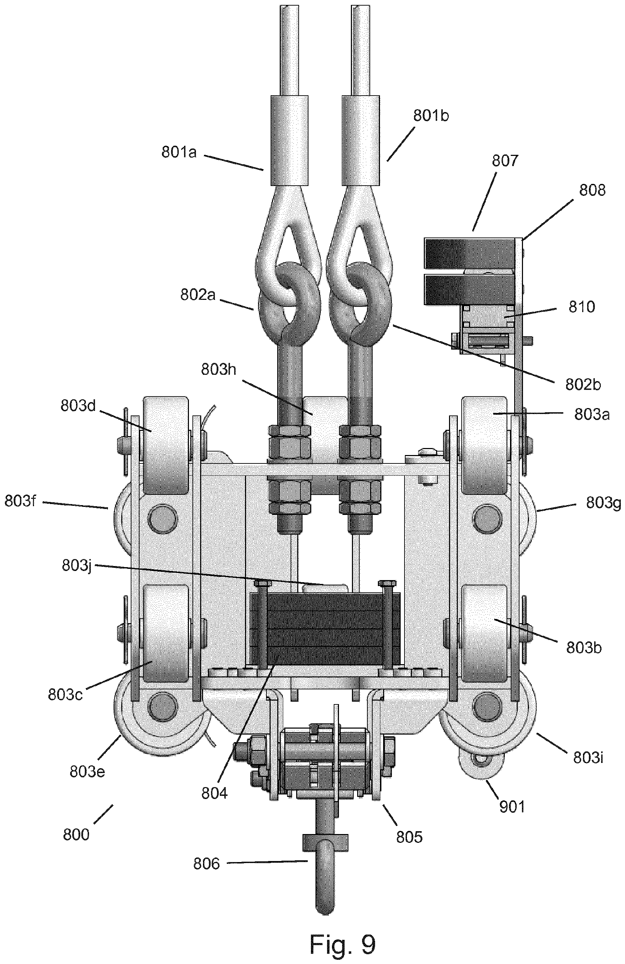

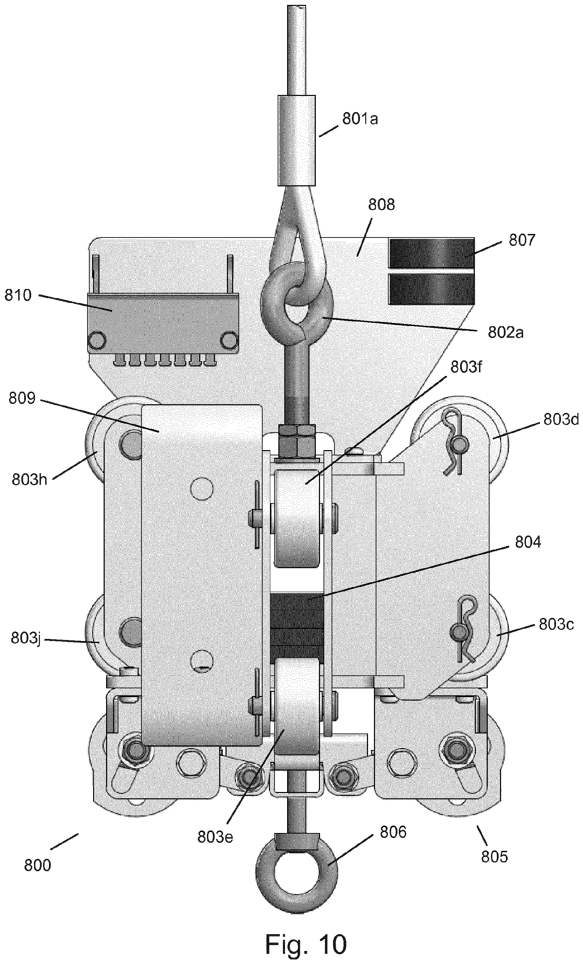

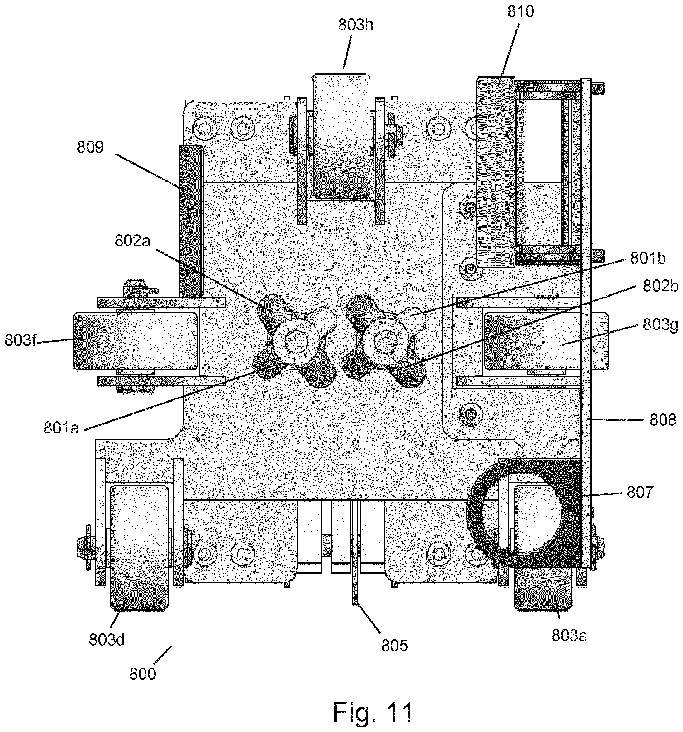

At the bottom end of the counter-weight carriage 800 is an auto-locking brake system 805 which is discussed in more detail below. The counter-weight carriage 800 also has a cable connector 807, as well as a flexible cable tracking connection bracket 810 which are mounted to the cable management connection plate 808. The cable connector 807 may receive the flexible cable bundle 204 discussed above. The cables contained within this bundle 204 may then be connected via the connection bracket 810 to external data and power linkages. This enables the cables to be disconnected from the connection bracket 810 in the event that the counter-weight carriage 800 is to be moved. The counter-weight carriage 800 also has a guide ski 809 for the tracking route, as well as an eye bolt 806 for connection to the winch 202. The guide ski 809 is used to ensure that the cables connected to the cable connector 807 cannot snag the counter-weight carriage 800 as it is moved within the pole 108. The guide ski 809 also acts to re-align the counter-weight carriage 800 within the pole 108 to ensure that it is in the correct alignment when moving within the pole 108. Figs. 9 and 10 are side planar views of the counter-weight carriage 800, and Fig. 11 is a top-down planar view of the counter-weight carriage 800.

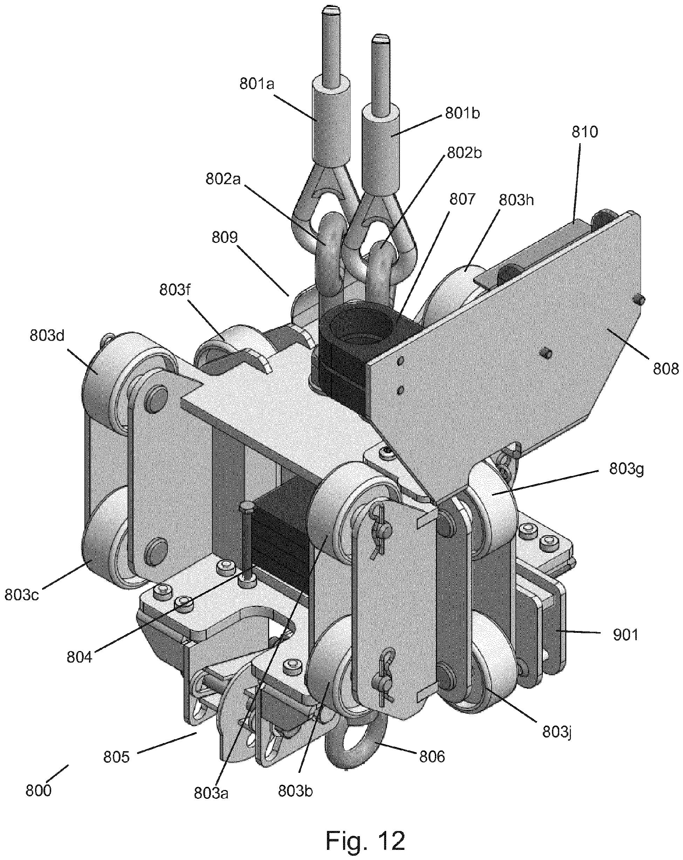

Notably Fig. 9 shows the hook receiver 901 for use with the lock-off mechanism. This hook receiver 901 is a generally an element of the counter-weight carriage 800 arranged to be able to receive the hook 602 of the lock-off mechanism 201. In a preferred embodiment this hook receiver 901 is formed of two plates protruding from the counter-weight carriage 800 with a bar linking the inner surfaces of the plates, the bar receiving the hook 602 of the lock-off mechanism 201. Fig. 12 is a rotated perspective view of the counter-weight carriage 800, showing the hook receiver 901.

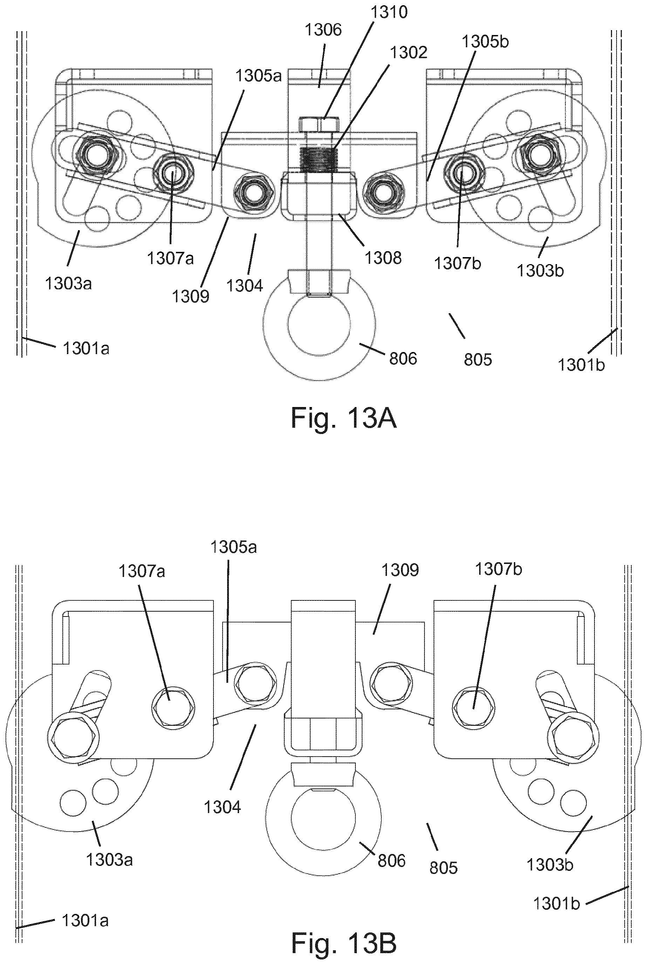

Figs. 13A and 13B show the auto-locking brake mechanism 805 in more detail. Fig. 13A shows the auto-locking brake mechanism 805 in a first configuration, where the brakes are not being operated. Fig. 13B shows the auto-locking brake mechanism 805 in a second configuration wherein the brakes are being operated. The auto-locking brake mechanism has a pair of cams 1303a and 1303b, connected via respective hinged arms 1305a and 1305b to an actuation mechanism 1304. The cams 1303a and 1303b are examples of brakes that may be used. These arms 1305a and 1305b are respectively hinged at points 1307a and 1307b. Therefore the arms may rotate around these respective points 1307a and 1307b. The actuation mechanism 1304 contains a spring 1302, which is compressed by a load being applied to the eye bolt point 806. The spring sits between a boss 1308, which is not moveable relative to the counter-weight carriage 800 by virtue of being integral with it, and a plate 1309 which is moveable down with the eyebolt 806 by virtue that the holding nut 1310 of the eyebolt 806 sits atop the plate 1309 and the plate 1309 is not integral with the counter-weight carriage 800.

When a load is applied to the eyebolt 806, the plate 1309 is pushed down, applying a load to and therefore compressing the spring 1302 and placing the auto-locking brake mechanism 805 in the first configuration shown in Fig. 13A. Its progression is halted by the boss 1308, either by the spring 1302 reaching maximum compression or by the tension in the spring 1302 matching the load applied by the eyebolt 806. The sleeve 102 and counter-weight carriage 800 are configured such that even when the sleeve 102 is being lowered though use of the winch 202, a sufficient load is applied to the eyebolt 806 that the cams 1303a, 1303b are not deployed. Preferably this load is applied in the form of tension from the weight of the sleeve 102 pulling up on the counter-weight carriage 800 which is integral with the boss and winch 202 resisting or pulling down on the auto-locking brake mechanism via tension in the winch 202 wire. The load applied to the eyebolt 806 may be relieved by the application of the hook 602 of the lock-off mechanism 201 to the hook receiver 901, this also being integral with the counter-weight carriage 800. This would allow the spring 1302 to expand, operating the brake mechanism 1304 and thereby doubly securing the counter-weight carriage 800 within the pole 100. Alternatively the load may be relieved by the failure of the winch 202 cable, in this case it is unlikely that the lock-off mechanism is engaged and therefore the auto-locking brake mechanism 805 may be solely responsible for holding the counter-weight carriage 800 in a position within the pole 100. In either case, the auto-locking brake mechanism 805 is placed into the second configuration by the expansion of the spring 1302. As will be appreciated, the spring 1302 should have a sufficiently high spring constant to allow the auto-locking brake mechanism 805 to successfully hold the counter-weight carriage 800 and sleeve 102 in place.

Therefore when a load is applied to the eye bolt point 806, the actuation mechanism 1304 is lowered, compressing the spring. In this compressed mode, the actuation mechanism 1304 is in a lower position, in which the cams 1303a and 1303b do not engage the inner walls 1301a and 1301b of the pole 100. If the load was removed from the eye bolt point 806, e.g. in the event of the failure of the winch 202 cable, the spring 1302 would expand as it would no longer be under compression, therefore moving the actuation mechanism 1304 upwards. This would raise the end of the hinged arms 1305a and 1305b connected to the actuation mechanism 1304, causing the other end of the hinged arms 1305a and 1305b to descend, thus moving the cams 1303a and 1303b down and outwards relative to the actuation mechanism 1304 so as to engage the inner walls 1301a and 1301b of the pole 100 which act as reaction surfaces.

It may be that as the hinged arms 1305a and 1305b descend, the point at which they connect to respective cams 1303a and 1303b extends away from the actuation mechanism 1304 so as to increase the contact of the cams 1303a and 1303b with the inner walls 1301a and 1301b of the pole 100. Preferably the cams 1301a and 1301b are snail cam brake discs. In normal operation the weight provided by the sleeve 102 keeps the system in tension, this prevents the spring 1302 from extending and deploying the cams 1303a and 1303b even when the counter-weight carriage 800 is moving up the inside of the pole 100. Therefore the auto-locking brake mechanism will only engage in the event of the failure of the winch cable connecting to the bolt 806.

Aspects of the disclosure herein may be expressed in the following clauses:
1. An equipment pole comprising:
   an upstanding elongate member for supporting equipment;
   a sleeve for carrying the equipment, the sleeve being slidably mounted on the upstanding elongate member;
   a counter-weight carriage connected to the sleeve over a fulcrum on the upstanding elongate member whereby the weight of the counter-weight carriage provides a balancing force to counter the weight of the sleeve;
   a support element under tension to hold the sleeve and counter-weight carriage stationary with respect to the upstanding elongate member;
   a movement mechanism for adjusting the position of the sleeve on the upstanding elongate member by altering the length of the support element; and
   an auto-locking brake mechanism mounted on the upstanding elongate member, the auto-locking brake mechanism being connected to the sleeve and having a disengaged configuration in which it is movable relative to the upstanding elongate member with the sleeve and an engaged configuration in which it engages the upstanding elongate member to prevent movement of the sleeve relative to the upstanding elongate member,
   wherein the auto-locking brake mechanism is arranged to adopt the engaged configuration if a tension force in the support element falls below a threshold.
2. An equipment pole according to clause 1, wherein the movement mechanism comprises a winch, and the support element is a wire whose length is adjustable using the winch.
3. An equipment pole according to clause 1 or 2, wherein the auto-locking brake mechanism is mounted in the counter-weight carriage.
4. An equipment pole according to any preceding clause, wherein the auto-locking brake mechanism includes a biasing element arranged to apply a biasing force that biases the auto-locking brake mechanism towards the engaged configuration, and wherein the auto-locking mechanism is coupled to the support element such that the tension force in the support element counteracts the biasing force if the tension force is above the threshold.
5. An equipment pole according to any preceding clause, wherein the weight of the sleeve is greater than the weight of counter-weight carriage, and wherein the support element is connected between the counter-weight carriage and an anchor point that is fixed with respect to the upstanding elongate member.
6. An equipment pole according to any preceding clause, wherein the auto-locking brake mechanism comprises a pair of opposed engagement elements which are laterally movable between an outwardly protruding position in the engaged configuration and a retracted position in the disengaged position.
7. An equipment pole according to clause 6, wherein the auto-locking brake mechanism comprises a spring that is compressible by the tension force in the support element, wherein the spring is connected to bias the pair of opposed engagement elements towards the outwardly protruding position.
8. An equipment pole according to clause 7, wherein the auto-locking brake mechanism comprises a plate and boss, the boss being fixed with respect to the counter-weight carriage and the plate being movably mounted with respect to the counter-weight carriage, wherein the spring is mounted between the plate and boss and the support element is attached to the plate.
9. An equipment pole according to clause 7 or 8, wherein the auto-locking brake mechanism comprises a force transfer mechanism connected to transform a longitudinal input force aligned with the upstanding elongate member into an activation force for moving the pair of opposed engagement elements.
10. An equipment pole according to clause 9, wherein the force transfer mechanism comprises a pair of pivoting arms, each pivoting arm being coupled to a respective one of the pair of opposed engagement elements, and wherein each of the pair of opposed engagement elements is a snail cam brake disc.
11. An equipment pole comprising:
   an upstanding elongate member for supporting equipment;
   a sleeve for carrying the equipment, the sleeve being slidably mounted on the upstanding elongate member;
   a counter-weight carriage connected to the sleeve over a fulcrum on the upstanding elongate member whereby the weight of the counter-weight carriage provides a balancing force to counter the weight of the sleeve;
   a support element under tension to hold the sleeve and counter-weight carriage stationary with respect to the upstanding elongate member;
   a movement mechanism for adjusting the position of the sleeve on the upstanding elongate member by altering the length of the support element; and
   a lock-off mechanism mounted on an anchor point that is fixed relative to the upstanding elongate member, the lock-off mechanism being operable to hold the sleeve and counter-weight carriage stationary with respect to the upstanding elongate member and thereby relieve tension in the support element.
12. An equipment pole according to clause 11, wherein the lock-off mechanism is connectable with the counter-weight carriage if the counter-weight carriage is in a predetermined position on the upstanding elongate member.
13. An equipment pole according to clause 11 or 12, wherein the anchor point is at a base of the upstanding elongate member.
14. An equipment pole according to any one of clauses 11 to 13, wherein the lock-off mechanism comprises a pivotable engagement element and an over-centre latch for retaining the pivotable engagement element in an engaged position.
15. An equipment pole according to any preceding clause, wherein the sleeve comprises:
   a support beam extending laterally from opposing sides of the upstanding elongate member;
   a pair of platforms for receiving equipment, the platforms being mounted on the support beam at opposing sides of the upstanding elongate member;
   an enclosed equipment cable routing portion having a cable connection point to provide access from the upstanding elongate member and a pair of cable ports to provide access respectively to the pair of platforms,
   wherein the cable connection point is shared by equipment on both of the pair of platforms.
16. An equipment pole comprising:
   an upstanding elongate member for supporting equipment;
   a sleeve for carrying the equipment, the sleeve being slidably mounted on the upstanding elongate member;
   a counter-weight carriage connected to the sleeve over a fulcrum on the upstanding elongate member whereby the weight of the counter-weight carriage provides a balancing force to counter the weight of the sleeve;
   a support element under tension to hold the sleeve and counter-weight carriage stationary with respect to the upstanding elongate member; and
   a movement mechanism for adjusting the position of the sleeve on the upstanding elongate member by altering the length of the support element,
   wherein the sleeve comprises:
      a support beam extending laterally from opposing sides of the upstanding elongate member;
      a pair of platforms for receiving equipment, the platforms being mounted on the support beam at opposing sides of the upstanding elongate member; and
      an enclosed equipment cable routing portion having a cable connection point to provide access from the upstanding elongate member and a pair of cable ports to provide access respectively to the pair of platforms, and
   wherein the cable connection point is shared by equipment on both of the pair of platforms.
17. An equipment pole according to clause 15 or 16, wherein the support beam is hollow.
18. An equipment pole according to clause 17, wherein the enclosed equipment cable routing portion is inside a portion of the support beam.
19. An auto-locking brake mechanism for a counter-weight type equipment pole, the auto-locking brake mechanism comprising:
   a frame containing a pair of engagement elements which are movable in opposing lateral directions with respect to the frame between an outwardly protruding position and a retracted position; and
   an brake engagement mechanism arranged to receive a longitudinal input force, wherein the brake engagement mechanism is arranged to move the pair of engagement elements to the outwardly protruding position if the longitudinal force falls below a threshold.
20. An auto-locking brake mechanism according to clause 19, wherein the brake engagement mechanism comprises a plate and boss, the boss being fixed with respect to the frame and the plate being movably mounted with respect to the frame, wherein the longitudinal input force is applied between the plate and boss.
21. An auto-locking brake mechanism according to clause 20, wherein a spring is mounted between the plate and boss and wherein the longitudinal input force comprises a force from the spring and an external force between the plate and boss.
22. An auto-locking brake mechanism according to clause 21, wherein the force from the spring is arranged to bias the pair of engagement elements into the outwardly protruding position, and wherein the external force counteracts the force of the spring, whereby the pair of engagement elements adopt the retracted position if the external force is above a threshold.
23. An auto-locking brake mechanism according to any one of clauses 20 to 22, wherein the brake engagement mechanism comprises a pair of arms that are pivotably mounted on the frame, each arm being connected at a first end to a respective one of the pair of engagement elements and at a second end to the plate, whereby pivoting the arms acts to move the respective engagement element between the outwardly protruding position and the retracted position.
24. An auto-locking brake mechanism according to clause 23, wherein each one of the pair of engagement elements is a snail cam brake disc.
25. An equipment supporting sleeve for a counter-weight type equipment pole, the equipment supporting sleeve comprising:
   a collar suitable for slidable mounting on an equipment pole;
   a support beam mounted on the collar and extending laterally from opposing sides thereof;
   a pair of platforms for receiving equipment, the platforms being mounted on the support beam at opposing sides of the collar;
   an enclosed equipment cable routing portion having a cable connection point to provide access from inside the collar and a pair of cable ports to provide access respectively to the pair of platforms,
   wherein the cable connection point is shared by equipment on both of the pair of platforms.

## Claims

1. An auto-locking brake mechanism (805) for a counter-weight type equipment pole (100), the auto-locking brake mechanism (805) comprising:
a frame containing a pair of cam discs (1303a, 1303b) at laterally opposing surfaces thereof, each cam disc (1303a, 1303b) having an outer circumferential surface that provides an outward engagement surface,
**characterised in that**:
each cam disc (1303a, 1303b) is movable relative to the frame between an outwardly protruding position and a retracted position; and
the auto-locking brake mechanism further includes a brake engagement mechanism (1304) arranged to receive a longitudinal input force, wherein the brake engagement mechanism (1304) is arranged to move the pair of cam discs (1303a, 1303b) to the outwardly protruding position if the longitudinal force falls below a threshold,
wherein each cam disc (1303a, 1303b) is rotatably mounted to the brake engagement mechanism (1304) about an axis that is offset from the centre of the cam disc (1303a, 1303b).

2. An auto-locking brake mechanism (805) according to claim 1, wherein the brake engagement mechanism (1304) comprises a plate (1309) and boss (1308), the boss (1308) being fixed with respect to the frame and the plate (1309) being movably mounted with respect to the frame, wherein the longitudinal input force is applied between the plate (1309) and boss (1308).

3. An auto-locking brake mechanism (805) according to claim 2, wherein a spring (1302) is mounted between the plate (1309) and boss (1308) and wherein the longitudinal input force comprises a force from the spring (1302) and an external force between the plate (1309) and boss (1308).

4. An auto-locking brake mechanism (805) according to claim 3, wherein the force from the spring (1302) is arranged to bias the pair of cam discs (1303a, 1303b) into the outwardly protruding position, and wherein the external force counteracts the force of the spring (1302), whereby the pair of cam discs (1303a, 1303b) adopt the retracted position if the external force is above a threshold.

5. An auto-locking brake mechanism (805) according to any preceding claim, wherein the brake engagement mechanism (1304) comprises a pair of arms (1305a, 1305b) that are pivotably mounted on the frame, each arm (1305a, 1305b) being connected at a first end to a respective one of the pair of cam discs (1303a, 1303b) and at a second end to the plate (1309), whereby pivoting the arms (1305a, 1305b) acts to move the respective cam disc (1303a, 1303b) between the outwardly protruding position and the retracted position.

6. An auto-locking brake mechanism (805) according to claim 5, wherein each cam disc (1303a, 1303b) is a snail cam brake disc.

7. An equipment pole (100) comprising:
an upstanding elongate member (108) for supporting equipment;
a sleeve (102) for carrying the equipment, the sleeve (102) being slidably mounted on the upstanding elongate member (108) ;
a counter-weight carriage (800) connected to the sleeve (102) over a fulcrum on the upstanding elongate member (108) whereby the weight of the counter-weight carriage (800) provides a balancing force to counter the weight of the sleeve (102) ;
a support element under tension to hold the sleeve (102) and counter-weight carriage (800) stationary with respect to the upstanding elongate member;
a movement mechanism for adjusting the position of the sleeve (102) on the upstanding elongate member (108) by altering the length of the support element; and
an auto-locking brake mechanism (805) according to any one of claims 1 to 6 mounted on the upstanding elongate member (108),
wherein the brake engagement mechanism (805) is connected to the support element whereby the longitudinal force comprises a tension force in the support element.

8. An equipment pole (100) according to claim 7, wherein the movement mechanism comprises a winch (202), and the support element is a wire whose length is adjustable using the winch (202).

9. An equipment pole (100) according to claim 7 or 8, wherein the auto-locking brake mechanism (805) is mounted in the counter-weight carriage (800).

10. An equipment pole (100) according to any one of claims 7 to 9, wherein the weight of the sleeve (102) is greater than the weight of counter-weight carriage (800), and wherein the support element is connected between the counter-weight carriage (800) and an anchor point that is fixed with respect to the upstanding elongate member (108).

## Patentansprüche

1. Selbstverriegelnder Bremsmechanismus (805) für einen Gegengewichts-Ausrüstungsmast (100), wobei der selbstverriegelnde Bremsmechanismus (805) Folgendes umfasst:
einen Rahmen, der ein Paar Nockenscheiben (1303a, 1303b) an seitlich gegenüberliegenden Oberflächen davon enthält, wobei jede Nockenscheibe (1303a, 1303b) eine äußere Umfangsfläche bereitstellt, die eine nach außen gerichtete Eingriffsfläche bietet,
**dadurch gekennzeichnet, dass**:
jede Nockenscheibe (1303a, 1303b) in Bezug auf den Rahmen zwischen einer nach außen vorstehenden Position und einer zurückgezogenen Position bewegbar ist; und
der selbstverriegelnde Bremsmechanismus weiters einen Bremseingriffsmechanismus (1304) umfasst, der angeordnet ist, um eine Längseingangskraft aufzunehmen, wobei der Bremseingriffsmechanismus (1304) angeordnet ist, um das Paar Nockenscheiben (1303a, 1303b) zu der nach außen vorstehenden Position zu bewegen, wenn die Längskraft einen Schwellenwert unterschreitet,
wobei jede Nockenscheibe (1303a, 1303b) um eine Achse, die gegenüber dem Mittelpunkt der Nockenscheibe (1303a, 1303b) versetzt ist, drehbar an dem Bremseingriffsmechanismus (1304) montiert ist.

2. Selbstverriegelnder Bremsmechanismus (805) nach Anspruch 1, wobei der Bremseingriffsmechanismus (1304) eine Platte (1309) und einen Ansatz (1308) umfasst, wobei der Ansatz in Bezug auf den Rahmen festgelegt ist und die Platte (1309) in Bezug auf den Rahmen bewegbar montiert ist, wobei die Längseingangskraft zwischen der Platte (1309) und dem Ansatz (1308) angelegt wird.

3. Selbstverriegelnder Bremsmechanismus (805) nach Anspruch 2, wobei eine Feder (1302) zwischen der Platte (1309) und dem Ansatz (1308) montiert ist und wobei die Längseingangskraft eine Kraft von der Feder (1302) und eine externe Kraft zwischen der Platte (1309) und dem Ansatz (1308) umfasst.

4. Selbstverriegelnder Bremsmechanismus (805) nach Anspruch 3, wobei die Kraft von der Feder (1302) ausgelegt ist, um das Nockenscheibenpaar (1303a, 1303b) in die nach außen vorstehende Position vorzuspannen und wobei die externe Kraft der Kraft der Feder (1302) entgegenwirkt, wodurch das Nockenscheibenpaar (1303a, 1303b) die zurückgezogene Position einnimmt, wenn die externe Kraft über einem Schwellenwert liegt.

5. Selbstverriegelnder Bremsmechanismus (805) nach einem der vorangegangenen Ansprüche, wobei der Bremseingriffsmechanismus (1304) ein Paar von Schenkeln (1305a, 1305b) umfasst, die schwenkbar auf dem Rahmen montiert sind, wobei jeder Schenkel (1305a, 1305b) an einem ersten Ende mit einer entsprechenden Nockenscheibe des Nockenscheibenpaars (1303a, 1303b) verbunden ist, wobei das Schwenken der Schenkel (1305a, 1305b) dazu dient, die entsprechende Nockenscheibe (1303a, 1303b) zwischen der nach außen vorstehenden Position und der zurückgezogenen Position zu bewegen.

6. Selbstverriegelnder Bremsmechanismus (805) nach Anspruch 5, wobei jede Nockenscheibe (1303a, 1303b) eine Exzenternockenbremsscheibe ist.

7. Ausrüstungsmast (100), der Folgendes umfasst:
ein aufrechtes, längliches Element (108) zum Stützen von Ausrüstung;
eine Hülse (102) zum Tragen der Ausrüstung, wobei die Hülse (102) verschiebbar auf dem aufrechten, länglichen Element (108) montiert ist;
einen Gegengewichtsschlitten (800), der über einen Schwenkpunkt auf dem aufrechten, länglichen Element (108) mit der Hülse (102) verbunden ist, wodurch das Gewicht des Gegengewichtsschlittens (800) eine Ausgleichskraft bereitstellt, um das Gewicht der Hülse (102) auszugleichen.
ein Stützelement unter Spannung, um die Hülse (102) und den Gegengewichtsschlitten (800) in Bezug auf das aufrechte, längliche Element stationär zu halten;
einen Bewegungsmechanismus zum Anpassen der Position der Hülse (102) auf dem aufrechten, länglichen Element (108) durch Verändern der Länge des Stützelements; und
einen selbstverriegelnden Bremsmechanismus (805) nach einem der Ansprüche 1 bis 6, der auf dem aufrechten, länglichen Element (108) montiert ist,
wobei der Bremseingriffsmechanismus (805) mit dem Stützelement verbunden ist, wobei die Längskraft eine Zugkraft in dem Stützelement umfasst.

8. Ausrüstungsmast (100) nach Anspruch 7, wobei der Bewegungsmechanismus eine Winde (202) umfasst und wobei das Stützelement ein Draht ist, dessen Länge unter Verwendung der Winde (202) einstellbar ist.

9. Ausrüstungsmast (100) nach Anspruch 7 oder 8, wobei der selbstverriegelnde Bremsmechanismus (805) in dem Gegengewichtsschlitten (800) montiert ist.

10. Ausrüstungsmast (100) nach einem der Ansprüche 7 bis 9, wobei das Gewicht der Hülse (102) größer ist als das Gewicht des Gegengewichtsschlittens (800) und wobei das Stützelement zwischen dem Gegengewichtsschlitten (800) und einem Ankerpunkt verbunden ist, der in Bezug auf das aufrechte, längliche Element (108) festgelegt ist.

## Revendications

1. Mécanisme de freinage à verrouillage automatique (805) destiné à un poteau d'équipement de type à contrepoids (100), le mécanisme de freinage à verrouillage automatique (805) comprenant :
un châssis contenant une paire de disques à came (1303a, 1303b) au niveau de surfaces latéralement opposées de celui-ci, chaque disque à came (1303a, 1303b) ayant une surface circonférentielle extérieure qui fournit une surface de mise en prise vers l'extérieur,
**caractérisé en ce que** :
chaque disque à came (1303a, 1303b) est mobile par rapport au châssis entre une position faisant saillie vers l'extérieur et une position rétractée ; et
le mécanisme de freinage à verrouillage automatique comprend en outre un mécanisme de mise en prise de frein (1304) conçu pour recevoir une force d'entrée longitudinale, dans lequel le mécanisme de mise en prise de frein (1304) est conçu pour déplacer la paire de disques à came (1303a, 1303b) vers la position faisant saillie vers l'extérieur si la force longitudinale tombe en dessous d'un seuil,
dans lequel chaque disque à came (1303a, 1303b) est monté de manière rotative sur le mécanisme de mise en prise de frein (1304) autour d'un axe qui est décalé par rapport au centre du disque à came (1303a, 1303b).

2. Mécanisme de frein à verrouillage automatique (805) selon la revendication 1, dans lequel le mécanisme de mise en prise de frein (1304) comprend une plaque (1309) et un bossage (1308), le bossage (1308) étant fixé par rapport au châssis et la plaque (1309) étant montée mobile par rapport au châssis, dans lequel la force d'entrée longitudinale est appliquée entre la plaque (1309) et le bossage (1308).

3. Mécanisme de freinage à verrouillage automatique (805) selon la revendication 2, dans lequel un ressort (1302) est monté entre la plaque (1309) et le bossage (1308) et dans lequel la force d'entrée longitudinale comprend une force provenant du ressort (1302) et une force externe entre la plaque (1309) et le bossage (1308).

4. Mécanisme de freinage à verrouillage automatique (805) selon la revendication 3, dans lequel la force provenant du ressort (1302) est agencé pour solliciter la paire de disques à came (1303a, 1303b) dans la position faisant saillie vers l'extérieur, et dans lequel la force externe agit à l'encontre de la force du ressort (1302), de sorte que la paire de disques à came (1303a, 1303b) adopte la position rétractée si la force externe est supérieure à un seuil.

5. Mécanisme de freinage à verrouillage automatique (805) selon l'une quelconque des revendications précédentes, dans lequel le mécanisme de mise en prise de frein (1304) comprend une paire de bras (1305a, 1305b) qui sont montés de manière pivotante sur le châssis, chaque bras (1305a, 1305b) étant connecté à une première extrémité à l'un respectif de la paire de disques à came (1303a, 1303b) et à une seconde extrémité à la plaque (1309), de sorte qu'un pivotement des bras (1305a, 1305b) agit pour déplacer le disque à came respectif (1303a, 1303b) entre la position faisant saillie vers l'extérieur et la position rétractée.

6. Mécanisme de freinage à verrouillage automatique (805) selon la revendication 5, dans lequel chaque disque à came (1303a, 1303b) est un disque de frein à came escargot.

7. Poteau d'équipement (100) comprenant :
un élément allongé vertical (108) pour supporter un équipement ;
un manchon (102) pour porter l'équipement, le manchon (102) étant monté de manière coulissante sur l'élément allongé vertical (108) ;
un chariot de contrepoids (800) relié au manchon (102) par-dessus un point d'appui sur l'élément allongé vertical (108), de sorte que le poids du chariot de contrepoids (800) fourni une force d'équilibrage pour contrer le poids du manchon (102) ;
un élément de support sous tension pour maintenir le manchon (102) et le chariot de contrepoids (800) stationnaires par rapport à l'élément allongé vertical ;
un mécanisme de déplacement pour ajuster la position du manchon (102) sur l'élément allongé vertical (108) en modifiant la longueur de l'élément de support ; et
un mécanisme de freinage à verrouillage automatique (805) selon l'une quelconque des revendications 1 à 6 monté sur l'élément allongé vertical (108),
dans lequel le mécanisme de mise en prise de frein (805) est relié à l'élément de support, de sorte que la force longitudinale comprenant une force de tension dans l'élément de support.

8. Poteau d'équipement (100) selon la revendication 7, dans lequel le mécanisme de déplacement comprend un treuil (202) et l'élément de support est un fil dont la longueur est réglable à l'aide du treuil (202).

9. Poteau d'équipement (100) selon la revendication 7 ou 8, dans lequel le mécanisme de freinage à verrouillage automatique (805) est monté dans le chariot de contrepoids (800) .

10. Poteau d'équipement (100) selon l'une quelconque des revendications 7 à 9, dans lequel le poids du manchon (102) est supérieur au poids du chariot de contrepoids (800), et dans lequel l'élément de support est connecté entre un chariot de contrepoids (800) et un point d'ancrage qui est fixé par rapport à l'élément allongé vertical (108).
